# EUROPEAN PATENT SPECIFICATION

(11) **EP 0 294 102 B1**
(45) Date of publication and mention of the grant of the patent: **12.10.1994**
(21) Application number: 88304777.1
(22) Date of filing: 26.05.1988
(51) Int. Cl.: H01L 41/08

(54) **Travelling-wave motor**
Wanderwellenmotor
Moteur à ondes mobiles

(30) Priority: 04.06.1987 JP 140402/87; 10.08.1987 JP 199498/87
(43) Date of publication of application: 07.12.1988
(73) Proprietor: SEIKO INSTRUMENTS INC., Tokyo 136 (JP)
(72) Inventor: Kasuga, Masao, Tokyo (JP)
(74) Representative: Sturt, Clifford Mark

(56) References cited:
- DE-A- 2 910 699
- PATENT ABSTRACTS OF JAPAN vol. 10, no. 168 (E-411)(2224) 14 June 1986 & JP-A-61 18370
- PATENT ABSTRACTS OF JAPAN vol. 11, no. 138 (E-503)(2585) 02 May 1987 & JP-A-61 277386
- PATENT ABSTRACTS OF JAPAN vol. 9, no. 173 (E-329)(1896) 18 July 1985 & JP-A-60 046781
- PATENT ABSTRACTS OF JAPAN vol. 10, no. 170 (E-412)(2226) 17 June 1986 & JP-A-61 022778

## Description

### "TRAVELLING-WAVE MOTOR"

This invention relates to a travelling wave motor, e.g. a compact ultrasonic motor using ultrasonic oscillation and having a electromechanical transducer for generating a travelling-wave and a movable member driven by the travelling wave.

One known ultrasonic motor is a standing-wave type motor which employs a Langevin oscillator as a driving source. Such a motor is disclosed in US-A-4,019,073. Another known ultrasonic motor is a travelling-wave type motor employing a travelling wave generated on a stator for driving a rotor provided on the stator. The travelling-wave motor generates smaller wear in the friction-transmission surface between the stator and the rotor, and can more easily be driven in the reverse rotation direction by comparison with the standing-wave type motor. Such a travelling-wave motor is disclosed in US-A-4,513,219 (Katsuma et al), US-A-4,562,374 (Sashida) and EP-A-169,297 (Tokushima).

Katsuma et al. and Sashida disclose a travelling-wave motor employing a Ling type piezo-electric member. This type of travelling-wave motor essentially consists of an annular vibrating body and a movable body provided thereon. The vibrating body has an annular piezo-electric vibrator thereon. The vibrating body is fixed to a base through a supporting mechanism. On the annular piezo-electric vibrator, a gap having a length of half of the arc of an electrode is provided between two electrode groups. The travelling wave is brought about by applying an AC signal having a phase difference of 90° to the two groups.

Another type of travelling-wave motor employing a disk-shaped piezo-electric member is disclosed in the European Patent of Tokushima. In such a motor, a stator is constituted by a disk-shaped resilient vibrating body having a toothlike circular projection. The vibrating body has a disk-shaped piezo-electric vibrator thereon. A movable body is provided on the projection of the vibrating body and has a central shaft to act as a rotational guide. A pressure-regulating device is provided on the central shaft for effecting a suitable contact pressure between the vibrating body and the movable body so that the travelling wave component can be efficiently transmitted to the movable body. The vibrating body is supported and fixed on two circular projections formed on a base. The disk-shaped piezo-electric vibrator consists of a plurality of electrodes arranged in such a manner that the piezo-electric vibrator slips by a half pitch of the arc length, the piezo-electric vibrator having an even number of electrodes in the circumferential direction so that each electrode has the same arc length.

In a travelling-wave motor of the type described above, if its construction includes an annular vibrating body, the travelling wave is significantly damped to a certain degree due to the supporting structure provided since the flexure mode travelling wave which has been excited by the piezo-electric vibrator has no nodal point of oscillation. As a result of this, the electro-mechanical transducing efficiency is low. If the construction of the travelling-wave motor includes a disc-type of vibrating body, there is the advantage that the vibrating body can be fixed and supported by the base at two places in the radial direction of the base because the vibrating body is excited in a secondary oscillation mode in the radial direction of the vibrating body.

However, the poor efficiency referred to above occurs due to variation in the position of the nodal points and the magnitude of the supporting force. As the diameter and the thickness are decreased, the problem inevitably increases. Furthermore, since the disk type motor employs a movable body which is integrally formed with the central shafts, the shafts must be supported by means of a bearing member provided in the movable body. If the Ling type motor employs such a movable body, a bearing member is required to be provided in the base. Furthermore, since the construction of a piezo-electric vibrator of the type described must be such that the neighbouring electrodes are polarized in different directions with respect to each other, it is necessary to provide a proper gap between the electrodes for the purpose of preventing leaks or cracks and so on due to concentration of stress generated during polarization in a high electric field. Therefore, gaps of a proper width between neighbouring electrodes are provided. In general, a suitable width for such a gap is considered to be substantially twice the thickness of the piezo-electric oscillator. These gaps, however, give rise to the fact that the phases of the travelling waves and the amplitude of the travelling waves deteriorate. Furthermore, since these gaps are unsaturated portions left from polarization of the neighbouring electrodes conducted in the different directions, a non-uniform wavelength of each travelling wave occurs. Furthermore, when it is desired to provide a device with a small diameter or a device having low electricity consumption, this is not possible if most of the circumferential portion is occupied by input electrodes.

In JP-A-61-18370 there is disclosed an horizontal support member 7 on which are successively mounted an annular piezo-electric unit 5, an annular vibratable unit 6, an annular slider 12 and an inverted U-shaped rotor 8. The rotor 8 is forced against the slider 12 by a spring 10 which is engaged by the head of a vertically extending screw 9 which is fixed to the support means 7. When a voltage is applied to the piezo-electric unit 5, a travelling wave is generated in the vibratable unit 6 which drives the rotor 8. The screw 19 passes freely through the members 5, 6, 12 and 8.

According to the present invention, there is provided a travelling-wave motor comprising support means which is part of a fixed structure and which supports a vibrating body; a piezo-electric vibrator which is secured to the vibrating body and which is adapted to generate travelling waves in the latter, the piezo-electric vibrator being spaced from the support means; a movable body which is driven by the vibrating body and which is in pressure contact with the vibrating body; and pressure regulating means for adjusting the contact pressure between the movable body and the vibrating body characterised in that the support means is a shaft which is fixed to, or is integral with, the vibrating body, the vibrating body and the piezo-electric vibrator being disc-shaped and the movable body being rotatably mounted on the shaft.

Preferably, the piezo-electric vibrator is fixed to one side only of the vibrating body.

The pressure regulating means may engage the movable body.

The outer diameter of the piezo-electric vibrator may be less than that of the vibrating body.

The support means is preferably constituted by a support shaft which acts as a centre of rotation of the movable body.

The pressure regulating means is preferably fixed to the shaft.

Preferably, the piezo-electric vibrator is provided with a plurality of similar equi-angularly spaced apart electrodes.

Preferably the circumferential gap between neighbouring electrodes at their radially outermost portions is 1/2 on 3/2 times the length of the arc of an electrode.

Preferably, the movable body or the vibrating body has an annular projection which contacts the other body.

The annular projection may be provided at the periphery of its respective body.

A travelling wave-motor in accordance with the present invention may be thin and may have a small diameter. It may also be such that there is no deterioration in the component of the travelling wave due to the support means for the vibrating body. It may also be such that the contact pressure between the movable body and the vibrating body may be easily adjusted, while the travelling-wave motor may have a low electricity consumption and there may be no slip in the phases of the travelling wave generated therein. It may also be such that there is no deterioration in the strength of the travelling wave component due to deterioration in the amplitude of the standing wave component excited in each of the electrodes.

As indicated above, the vibrating body may be supported by and integrally formed with a support shaft. As a result of this, even though the vibrating body may be thin and may have a small diameter, it can be stably and easily supported in such a way as to substantially prevent occurrence of any damping of the travelling wave.

A full understanding of the present invention will be obtained from the detailed description of the preferred embodiments presented hereinbelow, and the accompanying drawings, which are given by way of illustration only and are not intended to be limitative of the present invention, and wherein:
FIgure 1 is a vertical cross-sectional view of a first embodiment of a travelling-wave motor according to the present invention;
Figure 2 is a vertical cross-sectional view of a second embodiment of a travelling wave motor according to the present invention;
Figures 3(a) and 3(b) illustrate the operation of a vibrating body of the travelling-wave motor according to the present invention, the operation being in the radial direction;
Figure 4 illustrates the relationship between the shape of the vibrating body and the mechanical resonant frequency;
Figure 5 is a plan view of a piezo-electric vibrator which may be used in a travelling-wave motor according to the present invention, and
Figure 6 is a plan view of another piezo-electric vibrator which may be used in a travelling-wave motor according to the present invention.

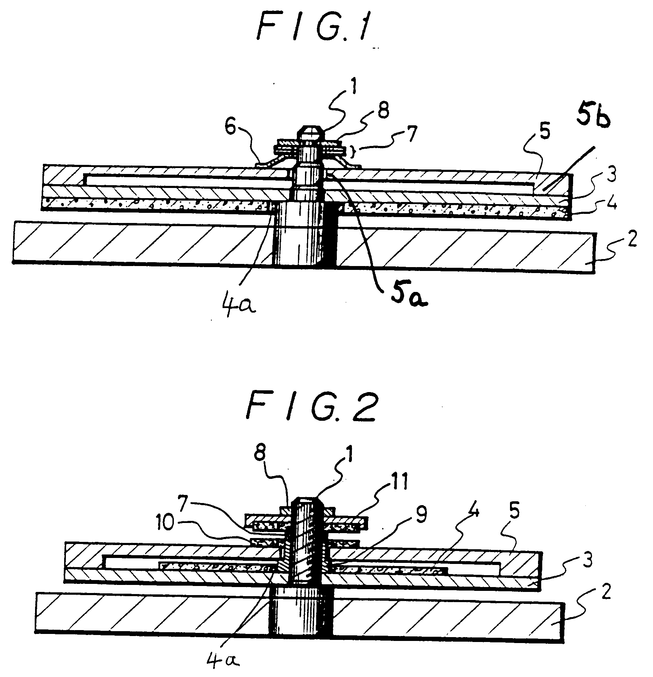

Figure 1 is a vertical cross-sectional view of a first embodiment of a travelling-wave motor according to the present invention. As shown in Figure 1, a central support shaft 1 is integrally formed with a base 2 which constitutes fixed structure for fixing the travelling wave motor in position. A disc-shaped vibrating body 3 is integrally formed with the central support shaft 1 at the central portion of the vibrating body 3 so that in operation there is no non-vibrating portion of the vibrating body 3 except at the support shaft 1. In this case, the vibrating body 3 is made of a resilient material such as stainless steel, brass or duralumin, and is substantially supported by the central support shaft 1 at the central portion of the vibrating body 3.

A piezo-electric vibrator 4 is secured to one side of the vibrating body 3 and is adapted to generate travelling waves in the latter. The piezo-electric vibrator 4 is spaced from the support shaft 1 by virtue of having a central aperture 4a so that in operation there is no non-vibrating portion of the piezo-electric vibrator 4. The piezo-electric vibrator 4 is formed by one or more piezo-electric ceramic plates each of which has a central aperture 4a or by several piezo-electric ceramic plates which are angularly spaced apart in the circumferential direction. Several patterned electrodes are provided on the plate or plates in the circumferential direction, and the piezo-electric vibrator 4 is polarized.

A movable body 5, which is driven by the vibrating body 3, has in the central portion thereof a guide hole 5a through which the central support shaft 1 extends so that the movable body 5 can rotate using the central support shaft 1 as a rotational centre. The movable body 5 has at its periphery an annular projection 5b which contacts the vibrating body 3, although the reverse arrangement is also possible. The movable body 5 is arranged to be pressurized and brought into contact with the vibrating body 3 by means of a pressure regulating device which is formed by a spring member 6, washers 7 and a stopper 8 and which is mounted on the movable member 5. The thus-described pressure regulating device controls the contact pressure between the vibrating body 3 and the movable body 5 so that it can most efficiently conduct the travelling wave component to the movable body 5 for the purpose of converting the travelling wave component to rotational motion, the travelling wave component being generated in the vibrating body 3 and the piezo-electric vibrator 4. Furthermore, the pressure-regulating device is provided on the central support shaft 1, allowing a slight adjustment to be easily effected of the contact pressure of the movable body 5 against the vibrating body 3 when the movable body 5 is pressurized and brought into contact with the vibrating body 3. Consequently, the movable body 5 can be rotated at the most suitable contact pressure.

The pressure regulating device is capable of regulating the contact pressure by way of changing the spring member 6 such as a leaf spring or cross spring or by an increase or decrease in the number of the washers 7. However, as an alternative to the stopper 8 using a C-ring or E-ring, a double-nut can be used for regulating the pressure.

The movable body 5 is so formed that it is brought into contact only with the outer surface of the vibrating body 3. Therefore, even if the vibrating body 3 is formed by thin flat resilient material, the travelling wave component excited by the vibrating body 3 can be uniformly conducted to the movable body 5. Thanks to the provision of the above-described structure, a thin and small-diameter vibrating body 3 and movable body 5 can be provided. Furthermore, in order to make the outer surface of the vibrating body 3 the maximum displacement portion in the radial direction, the excitation may be conducted at a driving frequency in which a resonance occurs in the primary vibration mode with respect to the radial direction. This fact helps to achieve a vibrating circuit and a driving circuit exhibiting a low electric current consumption due to the fact that low frequencies can be used.

Figure 2 is a vertical cross-sectional view of a second embodiment of a travelling-wave motor according to the present invention. The vibrating body 3 is integrally supported by the central support shaft 1 at the central portion of the vibrating body 3, the central support shaft 1 being formed integrally with the base 2. The surface of the vibrating body 3 on which the piezo-electric vibrator 4 is disposed is made the upper side thereof so that the overall width is reduced. The outer diameter of the piezo-electric vibrator 4 is made smaller than that of the vibrating body 3 so that the total electrostatic capacity of the peizo-electric vibrator 4 is reduced. As a result of this, a low electric current consumption device can be achieved.

In general, as the thickness of the piezo-electric vibrator 4 is decreased, the strength of the electrical field is increased, so allowing the device to be driven at a low voltage. On the other hand, since the electrostatic capacity increases, the electric current is increased. Therefore, such a decrease in the diameter of the piezo-electric vibrator 4 is desirable.

In this embodiment, the pressure regulating device uses the power of the repulsion between two permanent magnets. The construction is such that a magnet 10 provided on the movable body 5 and another magnet 11 which is abutted by the stopper 8 repel each other so as to bring the movable body 5 into abutment with the vibrating body 3. A guide member 9 statically supports the vibrating body 3 and acts as a guide for rotation of the movable body 5, the guide member 9 extending through the central aperture 4a of the piezo-electric vibrator 4 so that the latter is spaced from the guide member 9. Washers 7 regulate the contact pressure.

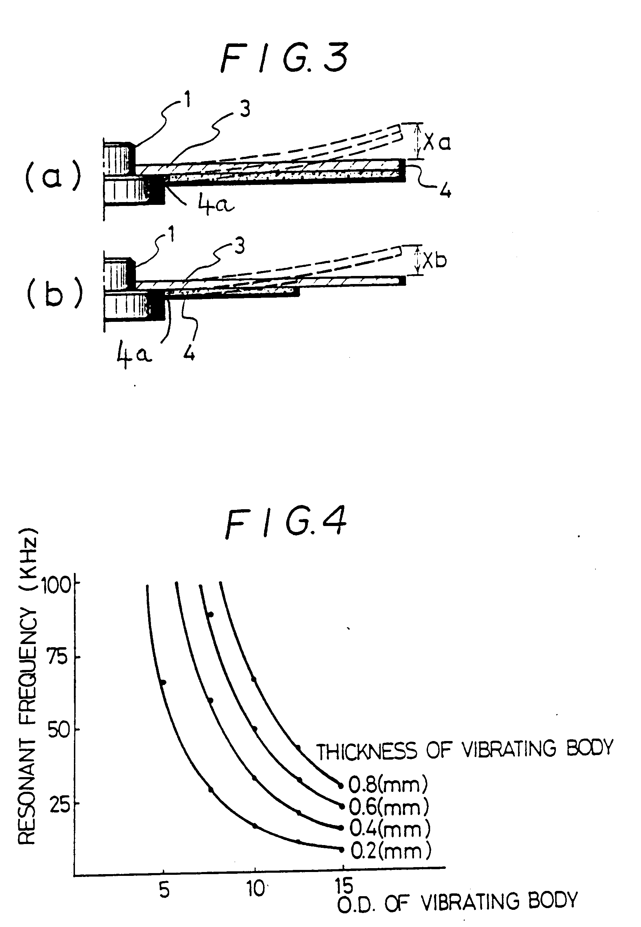

Figure 3 illustrates the operation of the vibrating body 3, the operation being conducted in the radial direction. The piezo-electric vibrator 4 is secured to one side of the vibrating body 3 whose central portion is secured to and is supported by the central support shaft 1. As a result, the vibrating body 3 and the piezo-electric vibrator 4 are integrally operated in the primary vibration mode in which the outer surface is displaced to a maximum.

Figure 3(a) shows the case in which the outer diameter of the vibrating body 3 and that of the piezo-electric vibrator 4 are the same, and in which, in operation, the vibrating body 3 is curved throughout its length as indicated by the dashed line. Thus the periphery of the vibrating body 3 undergoes a maximum displacement of Xa. On the other hand, Figure 3(b) shows the case in which the diameter of the piezo-electric vibrator 4 is smaller than that of the vibrating body 3.In the portion in which the piezo-electric vibrator 4 is joined to the vibrating body 3, the latter is in operation curved, while in the outer portion, the vibrating body 3 acts in a straight line like as a so-called displacement expanding member. Thus in this case the periphery of the vibrating body 3 undergoes a maximum displacement of Xb. The maximum displacement Xa is larger than Xb. However, the structure shown in Figure 3(b) has a displacement expansion member which is very effective to realize a low electric current consumption device.

Figure 4 illustrates the relationship between the shape of the vibrating body 3 and the mechanical resonant frequency. As illustrated, the material of the vibrating body 3 is brass, and the relationship is shown between the outer diameter of the vibrating body to which the piezo-electric vibrator is joined and the mechanical resonant frequency in a case in which three waves are generated in the circumferential direction, the curves of Figure 4 being made by changing the thickness of the vibrating body 3. As a result of securing and supporting the central portion of the vibrating body 3 and reducing the diameter of the same, the mechanical resonant frequency increases. Consequently, the vibration circuit and the drive circuit forming the travelling-wave motor becomes loaded. Therefore, in order to achieve a low electric current consumption, the mechanical resonant frequency should be set at as low a level as possible but at at least 20kHz which is called an ultrasonic wave. In order to achieve this object, the vibrating body 3 may be made thin. As described above, as the thickness of the piezo-electric vibrator 4 is decreased, the electrical field is strengthened, enabling a low voltage drive to be achieved. In order to effect vibration easily and to prevent cracks, the thickness of the vibrating body 3 is preferably in the range 0.10 to 0.20 mm. As can be clearly seen from this fact, when the outer diameter of the vibrating body 3 is made 10 mm, it is considered to be preferable to set the overall width of the vibrating body to 0.3 to 0.6 mm. Therefore, the thickness of the resilient material forming the vibrating body 3 is preferably similar to or slightly thicker than that of the piezo-electric vibrator 4 so as to improve the efficiency of a travelling-wave motor having the structure described above. Furthermore, with regard to the flexure mode travelling wave generated in the circumferential direction of the vibrating body 3, as the number of similarly shaped excitation waves increases, the mechanical resonant frequency is increased. Therefore the number of waves is preferably 2 to 4 from the viewpoint of stably rotating the movable body 5.

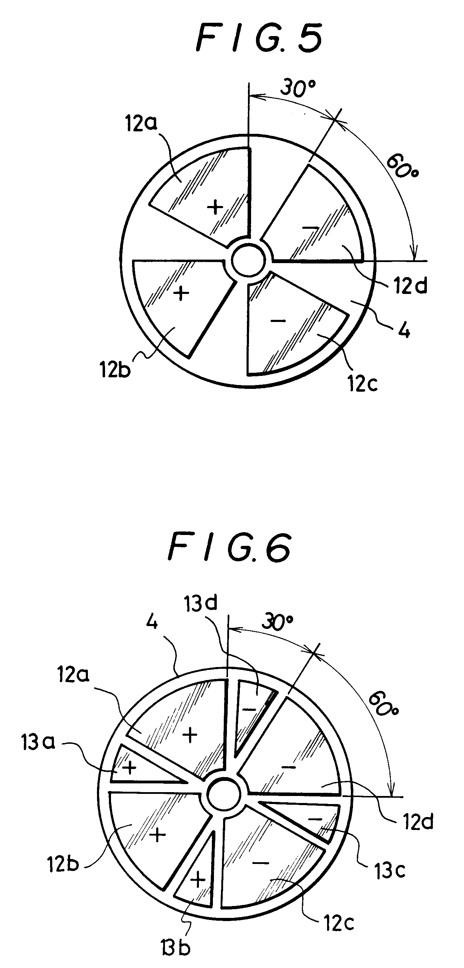

Figure 5 is a plan view of the piezo-electric vibrator 4. The piezo-electric vibrator 4 has in the central portion thereof a hole, and is provided with a plurality of similar, equi-angularly spaced apart, sector electrodes 12a to 12d on the surface thereof. Between the radially outermost portions of adjacent electrodes there is a gap each of which has a length which is half (or, if desired, 3/2 times) the arc length of the electrodes. When high frequency voltages having different phases respectively are inputted to each electrode after polarization has been effected so that the polarities illustrated in Figure 5 are achieved, a travelling-wave component is excited. The spaces shown as + are the spaces which are polarized by applying a positive electrical field to the reverse electrodes, while the spaces shown as - are the spaces which are polarized by applying a negative electrical field to the reverse electrodes. In this case, the reverse electrodes may be electrodes at the same position and of the same shape as those on the right side or may be entire-surface electrodes. In this embodiment, if sine waves are, for example, inputted to the electrodes 12a and 12c, travelling wave components having three waves in different travelling directions in the circumferential directions of the electrodes can be obtained by inputting high frequency voltages each of which has a phase difference of ± 90° in the time period. According to the construction of the electrodes of the piezo-electric vibrator 4, the number of waves of the travelling-wave component to be excited becomes an integral multiple of three. Because of the thus-excited travelling wave component, since the arc length of each electrode for inputting is equivalent to half the length of the travelling wavelength there can be an improvement in the slipping of the phases of the travelling waves and in deterioration in the strength of the travelling wave component due to the overlap of the waves, while the amplitude of the standing wave component which is excited in each electrode can be improved. Furthermore, since a uniform gap is respectively provided between the electrodes, a low electric current consumption device can be achieved. Therefore, the present invention can be used in electronic clocks and in drive motors for tape recorders in which a relatively high speed torque is required.

Figure 6 illustrates a piezo-electric vibrator 4 which is similar to that shown in Figure 5, but in which, in the gap portions between the electrodes 12a to 12d formed on the piezo-electric vibrator 4, there are provided electrodes 13a to 13d which do not receive any input. In this case, the electrodes 13a to 13d are in the main used to act for detection purposes, and can be used to follow the frequency of the travelling-wave motor or the speed change by using the levels of the back-voltage and the phases of the same as detection signals.

## Claims

1. A travelling-wave motor comprising support means (1) which is part of a fixed structure (2) and which supports a vibrating body (3); a piezo-electric vibrator (4) which is secured to the vibrating body (3) and which is adapted to generate travelling waves in the latter, the piezo-electric vibrator (4) being spaced from the support means (1); a movable body (5) which is driven by the vibrating body (3) and which is in pressure contact with the vibrating body (3); and pressure regulating means (6-8) for adjusting the contact pressure between the movable body (5) and the vibrating body (3) characterised in that the support means is a shaft (1) which is fixed to, or is integral with, the vibrating body (3), the vibrating body (3) and the piezo-electric vibrator (4) being disc-shaped, and the movable body (5) being rotatably mounted on the shaft (1).

2. A travelling-wave motor as claimed in claim 1 characterised in that the piezo-electric vibrator (4) is fixed to one side only of the vibrating body (3).

3. A travelling-wave motor as claimed in claim 1 or 2 characterised in that the pressure regulating means (6-8) engages the movable body (5).

4. A travelling-wave motor as claimed in any preceding claim characterised in that the outer diameter of the piezo-electric vibrator (4) is less than that of the vibrating body (5).

5. A travelling-wave motor as claimed in any preceding claim characterised in that the support means (1) is constituted by a support shaft which acts as a centre of rotation of the movable body (5).

6. A travelling-wave motor as claimed in claim 5 characterised in that the pressure regulating means (6-8) is fixed to the shaft (1).

7. A travelling-wave motor as claimed in any preceding claim characterised in that the piezo-electric vibrator (4) is provided with a plurality of similar, equi-angularly spaced apart electrodes (12a-12c).

8. A travelling-wave motor as claimed in claim 7 characterised in that the circumferential gap between neighbouring electrodes (12a-12c) at their radially outermost portions is 1/2 to 3/2 times the length of the arc of an electrode.

9. A travelling-wave motor as claimed in any preceding claim characterised in that the movable body (5) on the vibrating body (3) has an annular projection (5b) which contacts the other body.

10. A travelling-wave motor as claimed in claim 9 characterised in that the annular projection (5b) is provided at the periphery of its respective body.

## Patentansprüche

1. Wanderwellenmotor mit Lagermitteln (1), welche Teil einer festen Struktur (2) sind und einen Vibratorkörper (3) lagern; einem am Vibratorkörper (3) befestigten und von den Lagermitteln (1) beabstandeten piezoelektrischen Vibrator (4), welcher zur Erzeugung von Wanderwellen im Vibratorkörper dient; einem beweglichen Körper (5), der vom Vibratorkörper (3) angetrieben wird und mit dem Vibratorkörper (3) in Druckkontakt steht; sowie Druckregelmitteln (6-8) zur Einstellung des Kontaktdrucks zwischen dem beweglichen Körper (5) und dem Vibratorkörper (3), **dadurch** **gekennzeichnet**, daß die Lagermittel eine Welle (1) sind, welche am Vibratorkörper (3) befestigt oder einstückig mit diesem ausgebildet ist, daß der Vibratorkörper (3) und der piezoelektrische Vibrator (4) scheibenförmig sind, und daß der bewegliche Körper (5) drehbar auf der Welle (1) montiert ist.

2. Wanderwellenmotor nach Anspruch 1, **dadurch** **gekennzeichnet**, daß der piezoelektrische Vibrator (4) an einer Seite lediglich des Vibratorkörpers (3) befestigt ist.

3. Wanderwellenmotor nach Anspruch 1 oder 2, **dadurch** **gekennzeichnet**, daß die Druckregelmittel (6-8) mit dem beweglichen Körper (5) in Wirkverbindung stehen.

4. Wanderwellenmotor nach den vorhergehenden Ansprüchen, **dadurch** **gekennzeichnet**, daß der Außendurchmesser des piezoelektrischen Vibrators (4) kleiner als der des Vibratorkörpers (5) ist.

5. Wanderwellenmotor nach den vorhergehenden Ansprüchen, **dadurch** **gekennzeichnet**, daß die Lagermittel (1) durch eine Lagerwelle gebildet sind, welche als Rotationszentrum des beweglichen Körpers (5) dient.

6. Wanderwellenmotor nach Anspruch 5, **dadurch** **gekennzeichnet**, daß die Druckregelmittel (6-8) an der Welle (1) befestigt sind.

7. Wanderwellenmotor nach den vorhergehenden Ansprüchen, **dadurch** **gekennzeichnet**, daß der piezoelektrische Vibrator (4) mit einer Vielzahl von gleichartigen gleichen Winkelabstand aufweisenden Elektroden (12a-12c) versehen ist.

8. Wanderwellenmotor nach Anspruch 7, **dadurch** **gekennzeichnet**, daß der Umfangsspalt zwischen benachbarten Elektroden (12a-12c) an ihren radial äußersten Teilen gleich 1/2 bis 3/2 mal der Länge des Bogens einer Elektrode ist.

9. Wanderwellenmotor nach den vorhergehenden Ansprüchen, **dadurch** **gekennzeichnet**, daß der bewegliche Körper (5) auf dem Vibratorkörper (3) einen mit dem anderen Körper in Kontakt stehenden ringförmigen Ansatz (5b) besitzt.

10. Wanderwellenmotor nach Anspruch 9, **dadurch** **gekennzeichnet**, daß der ringförmige Ansatz (5b) am Umfang seines entsprechenden Körpers vorgesehen ist.

## Revendications

1. Moteur à onde progressive, comportant un moyen de support (1) qui fait partie d'une structure fixe (2) et qui soutient un corps vibrant (3); un vibrateur piézoélectrique (4) qui est fixé sur le corps vibrant (3) et qui est adapté pour engendrer des ondes progressives dans ce dernier, le vibrateur piézoélectrique (4) étant écarté du moyen de support (1); un corps mobile (5) qui est entraîné par le corps vibrant (3) et qui est en contact à pression avec le corps vibrant (3); et un moyen de réglage de la pression (6-8) pour ajuster la pression de contact entre le corps mobile (5) et le corps vibrant (3), caractérisé en ce que le moyen de support est constitué d'un arbre (1) qui est fixé au corps vibrant (3) ou fait corps avec celui-ci, le corps vibrant (3) et le vibrateur piézoélectrique (4) étant en forme de disque, et le corps mobile (5) étant monté à rotation sur l'arbre (1).

2. Moteur à onde progressive selon la revendication 1, caractérisé en ce que le vibrateur piézoélectrique (4) est fixé à un seul côté du corps vibrant (3).

3. Moteur à onde progressive selon la revendication 1 ou 2, caractérisé en ce que le moyen de réglage de la pression (6-8) est en contact avec le corps mobile (5).

4. Moteur à onde progressive selon l'une quelconque des revendications précédentes, caractérisé en ce que le diamètre extérieur du vibrateur piézoélectrique (4) est inférieur à celui du corps vibrant (5).

5. Moteur à onde progressive selon l'une quelconque des revendications précédentes, caractérisé en ce que le moyen de support (1) est constitué d'un arbre de support qui agit comme centre de rotation du corps mobile (5).

6. Moteur à onde progressive selon la revendication 5, caractérisé en ce que le moyen de réglage de la pression (6-8) est fixé sur l'arbre (1).

7. Moteur à onde progressive selon l'une quelconque des revendications précédentes, caractérisé en ce que le vibrateur piézoélectrique (4) est doté de plusieurs électrodes similaires (12a-12c) écartées l'une de l'autre d'un même angle.

8. Moteur à onde progressive selon la revendication 7, caractérisé en ce que l'interstice périphérique entre des électrodes (12a-12c) voisines vaut 1/2 à 3/2 fois la longueur de l'arc d'une électrode, dans leurs parties situées radialement le plus à l'extérieur.

9. Moteur à onde progressive selon l'une quelconque des revendications précédentes, caractérisé en ce que le corps mobile (4) sur le corps vibrant (3) présente une saillie annulaire (5b) qui est en contact avec l'autre corps.

10. Moteur à onde progressive selon la revendication 9, caractérisé en ce que la saillie annulaire (5b) est prévue à la périphérie du corps correspondant.
